# EUROPEAN PATENT APPLICATION

(11) **EP 2 570 169 A2**
(43) Date of publication of application: **20.03.2013**
(21) Application number: 11780797.4
(22) Date of filing: 11.05.2011
(51) Int. Cl.: B01D 39/16, B01D 46/00

(54) **AIR-CLEANING FILTER**

(30) Priority: 14.05.2010 KR 20100045253
(71) Applicant: Kim, Eui-Woong, Seoul 156-011 (KR)
(72) Inventor: Kim, Eui-Woong, Seoul 156-011 (KR)
(74) Representative: Goddar, Heinz J.
(86) International application number: PCT/KR2011/003465
(87) International publication number: WO 2011/142580

(57) **Abstract**

A cylindrical air clean filter that holds static electricity, in which pressures of an inside of a filter are equal in all use conditions so that a pressure loss may be reduced and good dust-collection efficiency may be achieved, the air clean filter including: a filter element formed by charging a polymer synthetic resin film; a plurality of protrusions formed on the filter element so that positions of the plurality of protrusions are non-uniform; ventilation passages formed by winding the polymer synthetic resin film in a cylindrical shape and being parallel to a direction in which the air flows; and a plurality of equal pressure holes formed between the plurality of protrusions of the filter element and penetrating both surfaces of the filter element.

## Description

### TECHNICAL FIELD

The present invention relates to an air clean filter, and more particularly, to a cylindrical air clean filter that holds static electricity.

### BACKGROUND ART

Various filters have been developed to collect dust of foreign substances in the air. These filters require a low pressure loss and good dust-collection efficiency.

Electret that holds static electricity is known as a filter having a low pressure loss and good dust-collection efficiency, and Korean Patent Registration No. 10-0310274 (hereinafter, referred to as "Patent literature 1") discloses a non-power static electricity filter among the above-described electrets, in which a fiber filter, such as a woven or non-woven fabric, is formed using polymer synthetic resin and simultaneously the fiber filter is charged by a high voltage generator so that the non-power static electricity filter can hold static electricity. Thus, the non-power static electricity filter of Patent literature 1 allows air to be dust-collected to flow in a direction perpendicular to the filter so that a low pressure loss of the requirements of the above-described filter is not satisfied.

The inventor and applicant of the present invention suggests an air clean filter that satisfied all requirements of the above-described filter and discloses the air clean filter with Korean Patent Registration No. 10-0481289 (hereinafter, referred to as "Patent literature 2"). In the air clean filter of Patent literature 2, a polymer synthetic resin film is charged and simultaneously, a plurality of protrusions are irregularly formed on the polymer synthetic resin film to a height of 0.1 to 5 mm, and the polymer synthetic resin film having the plurality of protrusions irregularly formed is wound in a cylindrical shape, and ventilation passages are formed parallel to a direction of the flow of air.

In the air clean filter of Patent literature 2 that is prior application by the inventor of the present invention, even when a fan is installed at an inlet or outlet of the air clean filter in an atmospheric pressure state or a low pressure state so as to allow air to be dust-collected to pass through the ventilation passages, pressures of an inside (each ventilation passage) of the air clean filter are almost equal so that good dust-collection efficiency can be maintained.

However, since, in the air clean filter of Patent literature 2, the filter is formed using a polymer synthetic resin film, if pressures of the inside of the filter, in particular, pressures between both surfaces of each ventilation passage are not uniform for many reasons, such as an expansion coefficient that varies according to a season, a large diameter of the filter, a difference in wind pressure and wind amount between the center and the outer circumference of a fan, or a position where the fan is installed, that is, an inlet or outlet of the filter, and high pressure of air to be dust-collected (installation of high pressure pipe of the filter), intervals between ventilation passages are not uniform, that is, intervals between ventilation passages under high pressure increase, and intervals between ventilation passages under low pressure decrease. As a result, dust-collection efficiency is lowered, an electric field strength, a wind amount, a wind speed, and a wind pressure are non-uniform, and the efficiency of capturing ultrafine particles and gas contained in an inorganic or organic compound is lowered.

### DETAILED DESCRIPTION OF THE INVENTION

### TECHNICAL PROBLEM

The present invention provides an air clean filter that has a low pressure loss and good dust-collection efficiency by equalizing pressures of ventilation passages in all use conditions.

### TECHNICAL SOLUTION

According to an aspect of the present invention, there is provided an air clean filter including: a filter element formed by charging a polymer synthetic resin film; a plurality of protrusions formed on the filter element so that positions of the plurality of protrusions are irregular; ventilation passages formed by winding the polymer synthetic resin film in a cylindrical shape and being parallel to a direction in which the air flows; and a plurality of equal pressure holes formed between the plurality of protrusions of the filter element and penetrating both surfaces of the filter element.

### DESCRIPTION OF THE DRAWINGS

FIG. 1 is a perspective view of an air clean filter of which part is unfolded, according to an embodiment of the present invention;
FIG. 2 is a cross-sectional view of the air clean filter illustrated in FIG. 1;
FIG. 3 is a partially-enlarged plan view of the air clean filter of FIG. 1; and
FIG. 4 is a cross-sectional view taken along a line A-A of FIG. 3.

### MODE OF THE INVENTION

Hereinafter, the present invention will be described in detail by explaining embodiments of the invention with reference to the attached drawings. Like reference numerals in the drawings denote like elements even though the reference numerals are indicated in different drawings. Also, if it is determined that a detailed description of a well-known configuration or function relating to embodiments of the invention may make the point of the present invention vague, the detailed description will be omitted.

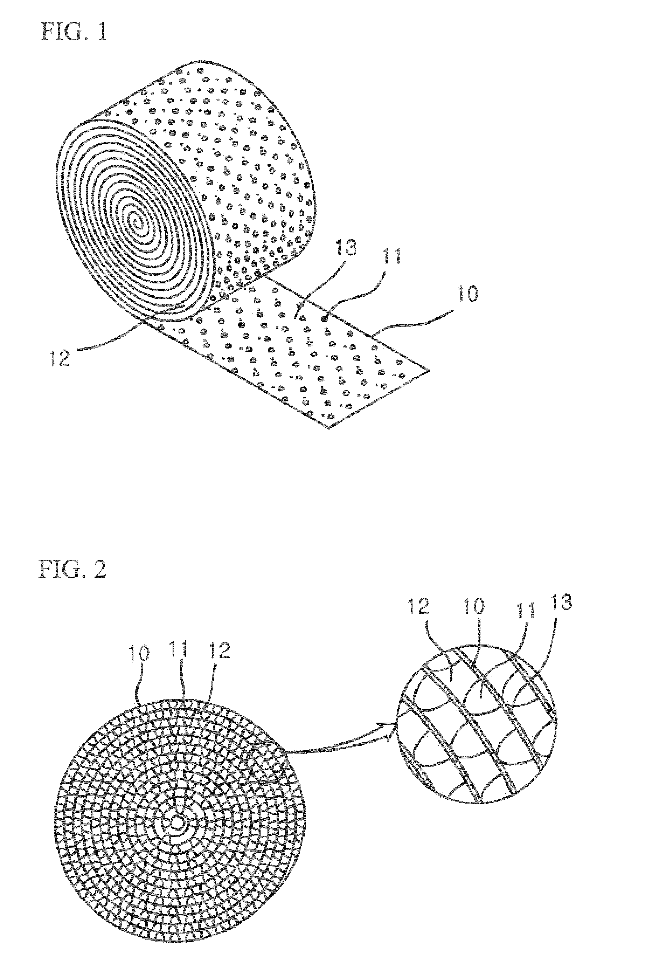

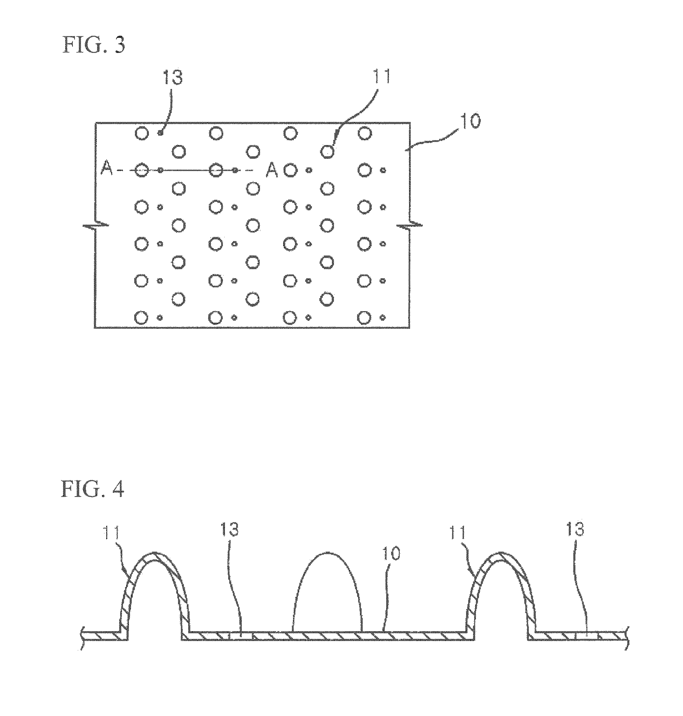

FIG. 1 is a perspective view of an air clean filter of which part is unfolded, according to an embodiment of the present invention, FIG. 2 is a cross-sectional view of the air clean filter illustrated in FIG. 1, FIG. 3 is a partially-enlarged plan view of the air clean filter of FIG. 1, and FIG. 4 is a cross-sectional view taken along a line A-A of FIG. 3.

In the air clean filter according to the current embodiment of the present invention, a polymer synthetic resin film formed of polypropylene or polyethylene and having a predetermined width is charged by using a corona discharging apparatus of 10 to 40 kV so as to apply positive and negative charges to form a filter element 10, and a plurality of protrusions 11 are formed on the filter element 10 at non-uniform intervals, for example, so that their positions are irregular, and the filter element 10 on which the plurality of protrusions 11 are formed simultaneously with the charging operation, is wound in a cylindrical shape so as to form ventilation passages 12 that are parallel to a direction in which air to be dust-collected flows and that have a width corresponding to the height of each protrusion 11, and a plurality of equal pressure holes 13 are formed to penetrate the filter element 10 between the protrusions 11 of the filter element 10 and to communicate with both surfaces of the filter element 10.

Each equal pressure hole 13 may have an arbitrary cross-sectional shape, for example, a polygonal shape, such as a circular shape, an oval shape, or a triangular shape. The cross-sectional area of the equal pressure hole 13 may be determined according to use conditions of a filter, for example, according to design conditions, such as an air passage pressure, a width or length of the ventilation passage 12, and a wind pressure of a fan.

The thickness of the filter element 10 may be 0.1 to 1 mm so as to maintain rigidity, and the height of the protrusion 11 may be about 0.1 to 5 mm and may be adjusted according to a condition of air to be cleaned, a ventilation amount (absorption air amount) or the number of revolutions of the fan. Also, the height of the protrusion 11 may be adjusted by the width of the filter element 10 so that a pressure loss may be freely adjusted.

That is, when the width of the filter element 10 is decreased, the height of the protrusion 11 may be decreased, and when the width of the filter element 10 is increased, the height of the protrusion 11 may be increased.

Since the filter element 10 is generally installed in a case, the width of the filter element 10 may be determined according to a design condition, such as a volume or shape of an air cleaner case and then the height of the protrusion 11 may be determined.

Also, the protrusions 11 are formed at irregular intervals so that, when air to be cleaned passes through the ventilation passages 12, detour passages are formed due to collision with the protrusions 11, and the air and the protrusions 11 are rubbed together so that dust-collection efficiency may be improved.

According to the present invention, air to be cleaned flows into the ventilation passages 12 parallel to the direction of flow of the air so as to collect fine particles and simultaneously to purify a smell of gas contained in the fine particles. Thus, it is better to disperse a porous deodorizer, such as active carbon or zeolite, and a disinfectant, such as silver or titanium oxide that may disinfect bacteria, into the filter element 10 when the filter element 10 is compressed, so as to further purify a smell of an acid or alkaline gas. Also, according to the present invention, after a film having a wide width is manufactured, the film may be cut to a predetermined width.

As described above, in the present invention, when air to be cleaned is absorbed in parallel to the ventilation passages 12 by installing the filter element 10 in the case, and installing a fan in rear of the filter element 10, if air to be cleaned passes the ventilation passages 12, charges (static electricity) that are permanently applied to the filter element 10 and particles are charged together so that dust of the air to be cleaned may be collected and simultaneously the smell of the gas may be purified, and the air to be cleaned flows in parallel to the ventilation passages 12 so that a pressure loss may be reduced and a passage length of the air to be cleaned may be increased and a charging operation may be smoothly performed and dust-collection efficiency may be improved.

According to the present invention, when the width of the filter element 10 is increased, the height of the protrusion 11 may be increased, and when the width of the filter element 10 is decreased, the height of the protrusion 11 may be decreased so that a degree of freedom of design of an air cleaner may be increased.

In addition, in the present invention as described above, by installing the fan at an inlet or outlet of the filter, or in the middle of the filter, air to be dust-collected passes through the fan parallel to the ventilation passages 12 and charges (static electricity) that are permanently applied to the filter element 10 and foreign substances are charged so that the air may be dust-collected and simultaneously, the smell of the gas maybe captured.

As described above, when foreign substances are dust-collected or captured, if a pressure difference between both surfaces of the filter element 10, i.e., between adjacent ventilation passages 12 occurs for reasons, such as a wind pressure (wind amount) difference between a center and an outer circumference of the fan or high pressure of air to be cleaned, a wind pressure at the ventilation passage 12 under high pressure is moved to the ventilation passages 12 under low pressure via the equal pressure holes 13 so as to maintain the wind pressure of both surfaces of the filter element 10 uniform and to maintain intervals between the ventilation passages 12 equal, and if intervals between all ventilation passages 12 are uniform, electric field strengths at all ventilation passages 12 are uniform so that a pressure loss may be reduced and good dust-collection efficiency may be maintained.

According to the present invention, the equal pressure holes 13 each having an arbitrary cross-sectional shape are formed between the protrusions 11 of the filter element 10 so that the structure of the filter may be simplified, the air clean filter may be conveniently and quickly manufactured and cost for new manufacture may be reduced.

### INDUSTRIAL APPLIABILITY

As described above, in the present invention, since equal pressure holes are formed in the filter element so as to communicate with both surfaces of the filter element, when air to be dust-collected passes through the ventilation passages, charges applied to the filter element and foreign substances are charged together and the air is dust-collected and gas contained in fine particles is captured (purified), if pressures between both surfaces of the filter element, i.e., pressures between adjacent ventilation passages are not in equilibrium, the air at a high pressure side flows into a low pressure side so that wind pressure non-equilibrium in the filter is removed and an equal pressure is formed at the ventilation passages. If the equal pressure is formed at the ventilation passages, as described above, intervals between the ventilation passages are uniform, and electric field strengths of the ventilation passages are uniform so that a pressure loss may be reduced and good dust-collection efficiency may be maintained, in particular, good efficiency of capturing gas contained in an inorganic or organic compound may be maintained.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An air clean filter comprising:
a filter element formed by charging a polymer synthetic resin film;
a plurality of protrusions formed on the filter element so that positions of the plurality of protrusions are non-uniform;
ventilation passages formed by winding the polymer synthetic resin film in a cylindrical shape and being parallel to a direction in which the air flows; and
a plurality of equal pressure holes formed between the plurality of protrusions of the filter element and penetrating both surfaces of the filter element.

2. The air clean filter of claim 1 wherein each of the equal pressure holes has an arbitrary cross-sectional shape.
